# EUROPÄISCHE PATENTSCHRIFT

(11) **EP 1 222 829 B1**
(45) Veröffentlichungstag und Bekanntmachung des Hinweises auf die Patenterteilung: **23.06.2004**
(21) Anmeldenummer: 00971320.7
(22) Anmeldetag: 05.10.2000
(51) Int. Cl.: H04Q 7/38

(54) **KOMMUNIKATIONSSYTEM ZUM SENDEN UND EMPFANGEN VON NUTZERBEZOGENEN INFORMATIONEN**
COMMUNICATION SYSTEM FOR TRANSMITTING AND RECEIVING USER-RELATED INFORMATION
SYSTEME DE COMMUNICATION POUR ENVOYER ET RECEVOIR DES INFORMATIONS PROPRES A L'UTILISATEUR

(30) Priorität: 06.10.1999 DE 19948826; 22.02.2000 DE 10009148
(43) Veröffentlichungstag der Anmeldung: 17.07.2002
(73) Patentinhaber: Lesswire AG, 15236 Frankfurt (DE)
(72) Erfinder: KRAEMER, Rolf, 15517 Fürstenwalde (DE); DAVID, Klaus, 48159 Münster (DE); SCHWANDER, Peter, 10119 Berlin (DE); LANGE, Ove, 10551 Berlin (DE); LANGER, Christian, 10407 Berlin (DE); SCHOOF, Gunter, 15236 Frankfurt (DE)
(74) Vertreter: Eisenführ, Speiser & Partner
(86) Internationale Anmeldenummer: PCT/EP2000/009751
(87) Internationale Veröffentlichungsnummer: WO 2001/030102

(56) Entgegenhaltungen:
- EP-A- 0 820 183
- WO-A-97/41654
- WO-A-99/31566
- US-A- 5 544 321

## Beschreibung

Es ist eine Kommunikationseinrichtung zur Orientierungshilfe insbesondere in Städten bekannt. Dabei gehen die Funktionen der Kommunikationseinrichtungen über die eines elektronisch vorliegenden Stadtplans hinaus. Dem Anwender wird die Möglichkeit gegeben, Besichtigungstouren durch eine Stadt zu planen, wobei öffentliche Verkehrsmittel, Sehenswürdigkeiten und weitere Informationen berücksichtigt werden. Des Weiteren werden alltägliche Vorgänge wie beispielsweise das Suchen einer Bank, eines Restaurants, der Polizei o.dgl. vereinfacht. Zusätzlich kann ein Veranstaltungskalender bei der Planung und der Orientierung verwendet werden. Die dafür benötigten Informationen können wahlweise vor abgespeichert werden oder online mit Hilfe einer drahtlosen Kommunikation abgerufen werden. Dabei ist die Standortbestimmung ein wichtiger Aspekt. Sie kann einerseits manuell andererseits auch unter Zuhilfenahme von GPS ("Global Positioning System") oder unter Verwendung von zellularer Mobilfunknetze erfolgend. Die Kommunikationseinrichtung enthält eine Eingabe/Ausgabe-Einheit, eine Verarbeitungseinheit, einen Speicher und eine Positionsbestimmungseinheit. Dabei ist es allerdings lediglich möglich, nur die angeforderten Informationen abzurufen, d.h. es ist nur eine statische Verknüpfung von Informationen vorgesehen. Der nutzer hat nur eingeschränkte Verknüpfungsmöglichkeiten zur Verfügung, da sich die Verknüpfungsmöglichkeiten lediglich auf die Planung von Aktivitäten in der Stadt oder dem Bereich beziehen.

Aus der WO 97/41654 ist bekannt, Informationen anhand eines Profils auszuwählen und an mobile Einheiten zu übertragen. Die Profile werden dabei in einem zentralen Message-Distribution-Center ausgewertet und die Daten, die übertragen werden sollen, entsprechend ausgewählt. Die ausgewählten Daten werden an die Basisstationen der Mobilfunknetze und von dort an die mobilen Einheiten übertragen.

Aus der US 5,544,321 ist es bekannt, einen User-Agenten als Programm auf einem vertrauenswürdigen Computer ablaufen zu lassen.

Ziel der vorliegenden Erfindung ist es, ein Datenübertragungsverfahren sowie eine Basisstation anzugeben, die eine größere Effizienz bieten als bekannte Verfahren oder Vorrichtungen.

Erfindungsgemäß wird dieses Ziel mit einem Datenübertragungsverfahren zum Übertragen ortsrelevanter Daten von einem Informationsserver an ein mobile Kommunikationseinrichtung über mindestens eine, die Übertragung vermittelnde Basisstation, wobei der Informationsserver Profile von mobilen Kommunikationseinheiten enthält, das die Schritte umfasst:
Bestimmen der in der Reichweite der Basisstation befindlichen mobilen Kommunikationseinrichtungen,
Speichern mindestens eines Profils für die in der Reichweite der Basisstation befindlichen Kommunikationseinheiten in einem Objektprofilspeicher der Basisstation,
Auswählen und Abrufen der ortsrelevanten Daten für die in der Reichweite der Basisstation befindlichen mobilen Kommunikationseinheiten gemäß dem Profil, und
Übertragen der gemäß dem Profil abgerufenen ortsrelevanten Informationen an die dem Profil entsprechende mobile Kommunikationseinheit.

Außerdem wird dieses Ziel durch eine Basisstation zum Abrufen ortsrelevanter Daten von einem Informationsserver und Übertragen der abgerufenen Daten an eine mobile Kommunikationseinheit gelöst, welche einen Sender/Empfänger zum Kommunizieren mit der mobilen Kommunikationseinheit aufweist, sowie eine Abrufeinheit zum Abrufen von auf dem Informationsserver gespeicherten Informationen, eine Abtasteinrichtung zum Erfassen der in Reichweite befindlichen mobilen Kommunikationseinheiten und eine mit dem Sender/Empfänger und der Abtasteinrichtung verbundene Verarbeitungseinrichtung zum Verarbeiten der Daten, wobei die Verarbeitungseinrichtung dazu ausgestaltet ist, Profile der von der Abtasteinrichtung erfassten mobilen Kommunikationseinheiten vom Informationsserver abzurufen und zu speichern, und eine mit der Verarbeitungseinrichtung verbundene Ausfalleinrichtung vorhanden ist, die dazu ausgestaltet ist, anhand der Profile die an die mobilen Einheiten zu übertragenden Daten auszuwählen.

Nachfolgend werden Ausführungsbeispiele der Erfindung anhand der anliegenden Zeichnungen beschrieben. Es zeigen:
- Figur 1: ein Blockschaltbild eines Kommunikationssystems;
- Figur 2: ein Blockschaltbild einer ersten Ausführungsform einer Kommunikationseinrichtung;
- Figur 3: ein Blockschaltbild einer zweiten Ausführungsform der Kommunikationseinrichtung;
- Figur 4: ein Blockschaltbild einer Verarbeitungseinrichtung;
- Figur 5: den prinzipiellen Aufbau des Netzwerksystems;
- Figur 6: den Aufbau eines mobilen Objektes in dem Netzwerksystem;
- Figur 7: den Aufbau einer Basisstation in dem Netzwerksystem; und
- Figur 8: den Aufbau eines Informationsservers in dem Netzwerksystem.

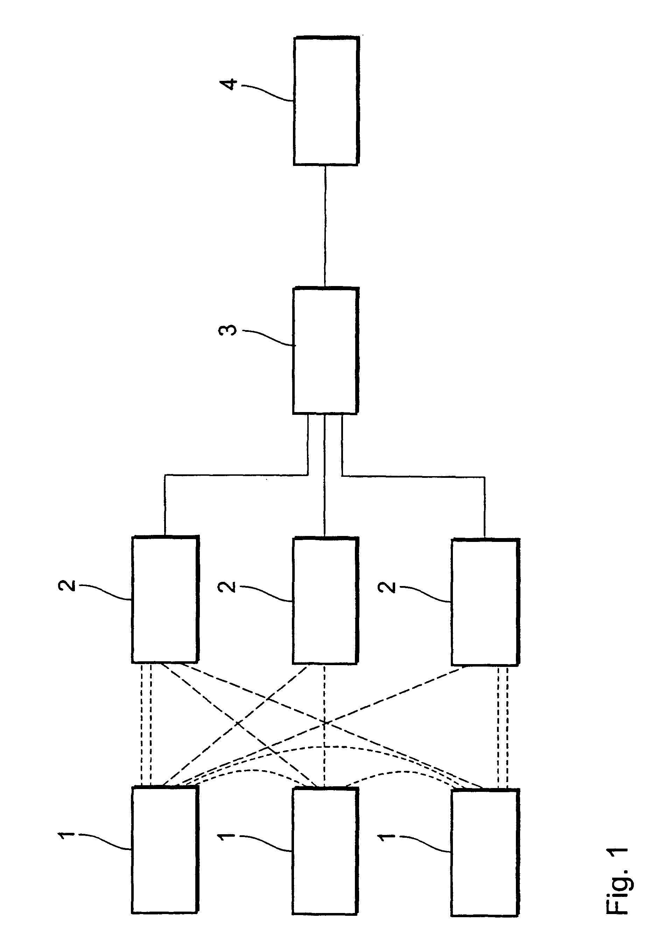

In Fig. 1 ist ein Kommunikationssystem gemäß einer ersten Ausführungsform dargestellt, welche aus mehreren Kommunikationseinrichtungen 1, mehreren Basisstationen 2, einem lokalen Netz (LAN) 3 und einer ersten Verarbeitungseinrichtung 4 aufgebaut ist. Die Basisstationen 2 sind über ein lokales Netz (LAN) 3 mit der ersten Verarbeitungseinrichtung 4 verbunden. Die Kommunikationseinrichtungen 1 können miteinander und mit einer Basisstation 2 kommunizieren, wobei die Kommunikationseinrichtung 1 auch als tragbare Variante ausführbar ist. Diese Kommunikation erfolgt drahtlos, ein Wechsel der jeweiligen Basisstationen ist möglich und eine Basisstation kann mit mehreren Kommunikationseinrichtungen gleichzeitig kommunizieren.

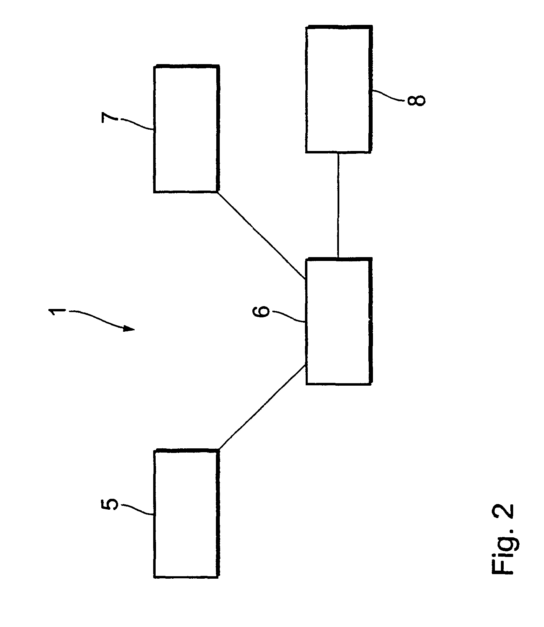

In Fig. 2 weist eine erste Ausführungsform der Kommunikationseinrichtung eine Eingabe/Ausgabe-Einheit 5 zum Eingeben der gewünschten Informationen und der Verarbeitungsregeln und zum Ausgeben der von der Basisstation oder anderen Kommunikationseinrichtungen empfangenen Informationen. Eine Zentraleinheit 6 ist mit der Eingabe/Ausgabe-Einheit 5, einem Speicher 7 und einem Sender/Empfänger 8 verbunden. In dem Speicher 7 können Informationen vorab gespeichert oder die von den Basisstationen oder anderen Kommunikationseinrichtungen online empfangenen Informationen können gespeichert werden. Der Sender/Empfänger 8 stellt die Kommunikation mit einer Basisstation 2 oder einer anderen Kommunikationseinrichtung sicher.

Die erste Verarbeitungseinrichtung 4 ist als zentrale Stelle des Kommunikationssystems vorgesehen. Die Basisstationen 2 sind mit der ersten Verarbeitungseinrichtung 4 über ein lokales Netzwerk 3 verbunden. Die erste Verarbeitungseinrichtung 4 weist eine Sender/Empfänger-Einheit 14 zum Kommunizieren mit den Basisstationen 2 und mit externen Verarbeitungseinrichtungen auf. Sowohl die von den Kommunikationseinrichtungen 1 über die Basisstationen 2 als auch die von den Basisstationen 2 direkt empfangenen Informationen werden in der ersten Verarbeitungseinrichtung ausgewertet und mit anderen Informationen aus einer Datenbank 13 verglichen, verknüpft und gegebenenfalls ausgegeben. Von den Kommunikationseinrichtungen 1 und den Basisstationen 2 gemeldeten Ereignisse werden in einer Ereignishandhabungseinheit 10 bewertet, eine Objekt-Eigenschaftseinheit 11 liefert alle gespeicherten Informationen bezüglich der bei dem Ereignis involvierten Objekte und wenn die Ereignishandhabungseinheit 10 feststellt, dass Maßnahmen bzw. Vorgänge ausgeführt werden müssen, leitet sie eine Anfrage an eine Verwaltungseinheit 12 weiter, um geeignete Anwendungen zu starten.

Wenn ein Anwender mit der tragbaren Kommunikationseinrichtung 1, die beispielsweise in einem Mobiltelefon oder in einem PDA ("Personal Digital Assistant") implementierbar ist, in den Empfangsbereich des Kommunikationssystems eintritt, kann der Anwender Informationen abrufen und empfangen. Zusätzlich können alle Informationen auf den Anwender zugeschnitten werden, wenn der Anwender beim Eintritt in den Empfangsbereich des Kommunikationssystems sein persönliches Profil übermittelt. Der Anwender kann auch die Verarbeitungsregeln vorgeben und jederzeit ändern. Dabei ist die Kommunikation bidirektional, was dem Anwender eine interaktive Kommunikation ermöglicht.

Die Kommunikation zwischen der Kommunikationseinrichtung 1 und den Basisstationen 2 sowie zwischen den jeweiligen Kommunikationseinrichtungen 1 untereinander erfolgt über eine kurzwellige Nachrichtenübertragung, die üblicherweise durch ein Bluetooth-Modul als ein integrierter Teil der tragbaren Kommunikationseinrichtung oder als ein zusätzliches Modul für die spätere Aufrüstung realisierbar ist.

Die Basisstationen 2 dienen sowohl der Weiterleitung von Daten und Ortsinformationen zwischen der ersten Verarbeitungseinrichtung 4 und den tragbaren Kommunikationseinrichtungen 1 als auch der Weiterleitung eigener Daten zu der ersten Verarbeitungsrichtung 4, wobei die Kommunikation mit den tragbaren Kommunikationseinrichtungen 1 drahtlos und die Kommunikation mit der ersten Verarbeitungseinrichtung 4 über ein lokales Netz 3 erfolgt.

Die erste Verarbeitungseinrichtung 4 verwendet die Ortsinformationen, die persönlichen Profile und Anwendungsdaten, um verschiedene Anwendungen bereitzustellen. So können Informationen für die persönlichen Anforderungen eines Anwenders aufbereitet werden, Ereignisse wie beispielsweise das Eintreten oder das Verlassen von mobilen Objekten in/aus einen Bereich können erfasst und verarbeitet werden, auf eine Anfrage können die Eigenschaften und der genaue Ort von festen oder mobilen Objekten einschließlich einer Ereignishandhabung ermittelt werden, und zusätzlich kann eine Verknüpfung der orts- und objektbezogenen Informationen durchgeführt werden. So ist es beispielsweise möglich zu überprüfen, welches Objekt bzw. welche Person sich wann, wo und wie lange aufhält.

Wenn beispielsweise in einem abgeschlossenen Gebäude in jedem Zimmer eine Basisstation vorhanden ist, kann das Eintreten bzw. das Verlassen eines mobilen Objektes bzw. eines Anwenders erfasst und an die zentrale Verarbeitungseinrichtung weitergeleitet werden. Aus der Korrelation zwischen den objekt- bzw. personenbezogenen Daten und den ortsbezogenen Daten lassen sich objekt- bzw. personenbezogene und ortsbezogene Profile erstellen.

Zwei Anwender, die sich innerhalb des Empfangsbereichs des Kommunikationssystems befinden, können mit Hilfe ihrer Kommunikationseinrichtungen miteinander kommunizieren. Wenn die beiden Anwender sich in einer großen Entfernung voneinander befinden, kann diese Kommunikation mittels der Basisstationen unter Verwendung eines ersten Übertragungsverfahrens mit einer großen Reichweite aber einer geringen Bandbreite erfolgen. Wenn die Entfernung der Anwender voneinander nun gering ist, d.h. wenn die beiden Anwender sich jeweils im Sendebereich bzw. in der sogenannten Aura der Kommunikationseinrichtung des anderen befinden, ist eine direkte Kommunikation ohne Umweg über die Basisstationen unter Verwendung eines zweiten Übertragungsverfahrens mit einer geringeren Reichweite aber mit einer hohen Bandbreite möglich. Die Kommunikationseinrichtung ist somit in der Lage, zwischen dem ersten und dem zweiten Übertragungsverfahren zu schalten und beide Verfahren gleichzeitig zu verwenden. Um eine derartige Kommunikation zu vereinfachen, ist sowohl die Sendeleistung als auch die Abstrahlungscharakteristik der Sender der Kommunikationseinrichtungen variierbar vorgesehen.

Dabei handelt es sich bei dem ersten Übertragungsverfahren beispielsweise um ein GSM-Übertragungsverfahren und bei dem zweiten Übertragungsverfahren um eine Bluetooth-Übertragung. Das Umschalten zwischen den beiden Übertragungsverfahren sowie die parallele Verwendung der beiden Übertragungsverfahren ist auch im Rahmen anderer Kommunikationssysteme einsetzbar.

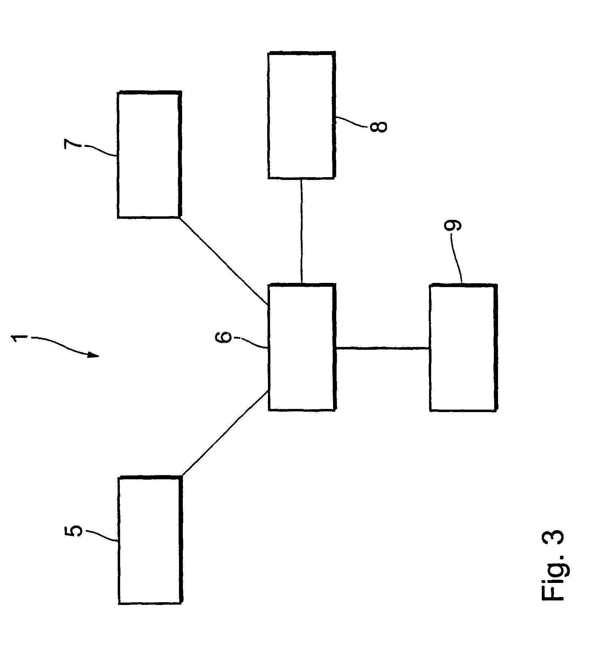

In Fig. 3 ist eine zweite Ausführungsform der Kommunikationseinrichtung dargestellt. Bei dieser Ausführungsform ist im Gegensatz zu der ersten Ausführungsform keine zentrale Verarbeitungseinrichtung 4 vorhanden. Jede Kommunikationseinrichtung weist eine Eingabe/Ausgabe-Einheit 5 zum Eingeben der gewünschten Informationen und zum Ausgeben der von der Basisstation (optional) oder anderen Kommunikationseinrichtungen empfangenen Informationen, einen Speicher 7 zum Speichern der Informationen, einen Sender/Empfänger 8, eine Zentraleinheit 6 zum Steuern der Kommunikationseinrichtung 1 und eine Verarbeitungseinrichtung 9 auf. Die Verarbeitungseinrichtung 9 weist ebenfalls wie die Verarbeitungseinrichtung 4 eine Ereignishandhabungseinheit 10 zum Bewerten von durch die Kommunikationseinrichtungen 1 und die Basisstationen 2 erfassten Ereignissen, eine Objekt-Eigenschaftseinheit 11 zum Bereitstellen von Informationen bezüglich der Ereignisse und aller beteiligten Objekte, eine Verwaltungseinheit 12 zum Starten von geeigneten Anwendungen und eine Datenbank 13 auf. Wie zuvor erwähnt, sind bei dieser Ausführungsform keine zentrale Verarbeitungseinrichtung oder Basisstationen vonnöten, d.h. die Kommunikationseinrichtungen 1 können auch ohne vorhandene Infrastruktur direkt miteinander kommunizieren und so ein drahtloses lokales Netzwerk aufbauen. Dabei ist jedoch zu beachten, dass die Informationen in der Datenbank 13 nicht ohne Weiteres aktualisiert werden kann. Zum Aktualisieren der Datenbank 13 muss die Kommunikationseinrichtung 1 zuerst mit einer zentralen Verarbeitungseinrichtung 4 verbunden werden. Ferner ist darauf zu achten, dass die verwendeten Kommunikationseinrichtungen die gleichen informationen in ihrer Datenbank aufweisen, damit jede Kommunikationseinrichtung auf die gleiche Informationsbasis zurückgreifen kann.

Eine Kombination aus der ersten und der zweiten Ausführungsform ist ebenfalls möglich.

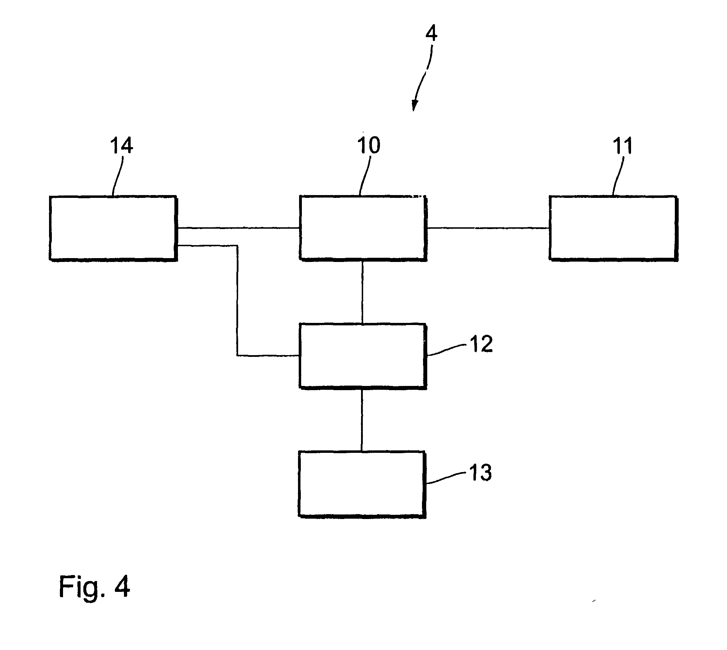

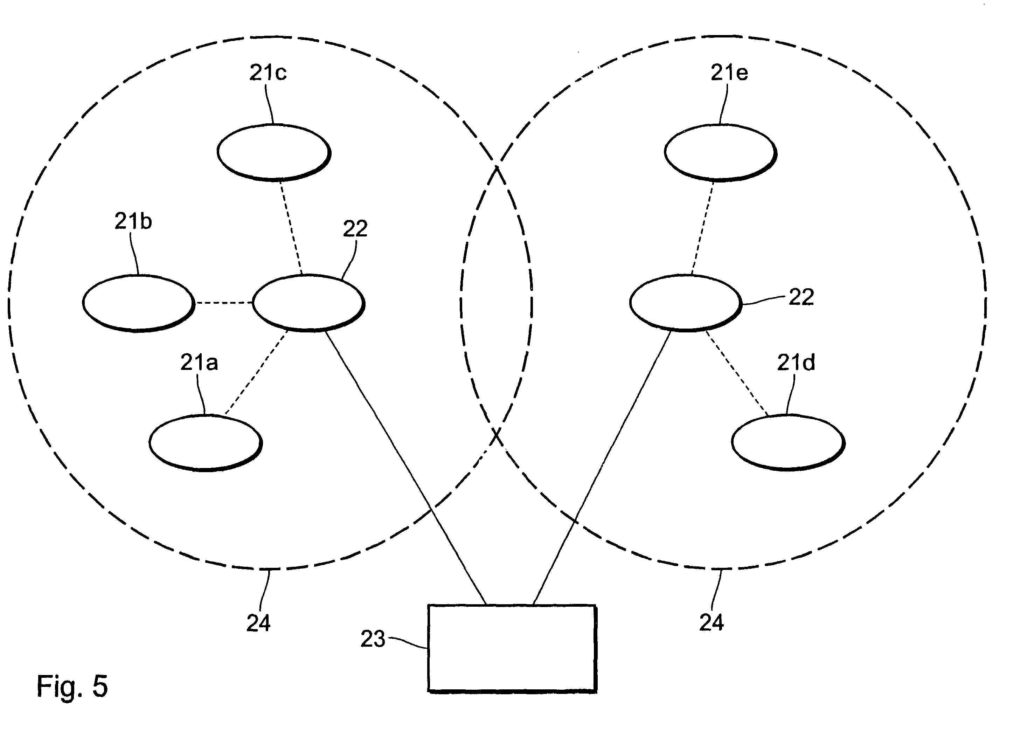

Die Ausführungsbeispiele der Figuren 5 bis 8 stellen vor allem bevorzugte Ausführungen der in den Figuren 1 bis 4 abgebildeten Ausführungsformen dar. Soweit die Merkmale der Ausführungsbeispiele voneinander abweichen, können diese auch alternativ oder zusätzlich bei den jeweils entsprechenden anderen Ausführungsbeispielen verwirklicht werden. Es entsprechen sich insbesondere jeweils die Kommunkationseinrichtungen 1 und die mobilen Objekte 21, die Basisstationen 2 und 22 und die Verarbeitungseinrichtung 4 und die Informationsserver 23.

Figur 5 zeigt ein ortssensitives Netzwerksystem, welches sich aus einem Informationsserver 23, mehreren Basisstationen 22 und einer Vielzahl von als Clients fungierenden mobilen Objekten 21 zusammensetzt. Die Basisstationen 22 sind mit dem Informationsserver 23 über ein LAN (lokales Netzwerk) verbunden. Die mobilen Objekte 21 und die jeweiligen Basisstationen 22 kommunizieren drahtlos miteinander. Der Informationsserver 23 enthält eine Verarbeitungseinrichtung im Sinne der Figuren 1 bis 4. Die mobilen Objekte 21 entsprechen den Kommunikationseinrichtungen der Figuren 1 bis 4.

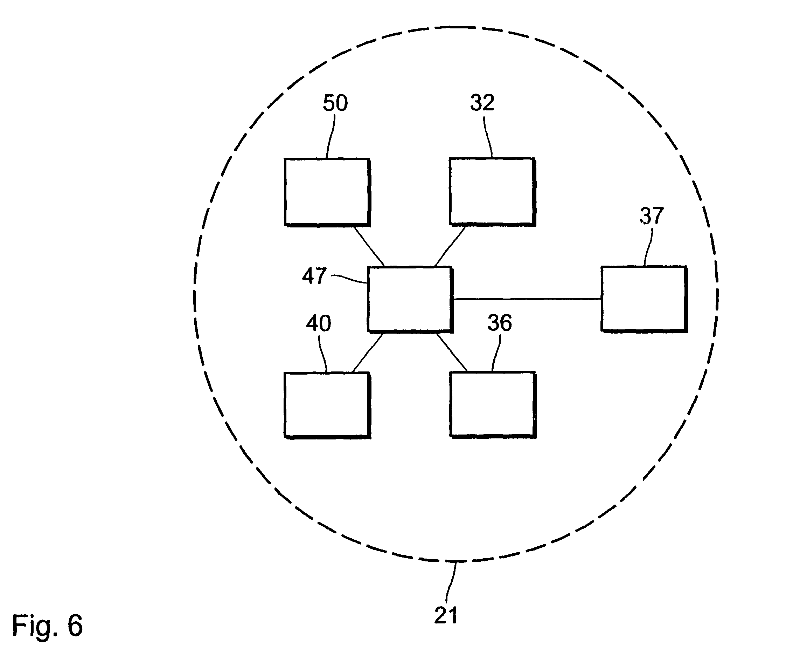

Das mobile Objekt 21 weist gemäß Fig. 6 eine Verarbeitungseinrichtung 47 als zentrale Steuereinrichtung auf, mit der alle anderen Elemente des mobilen Objektes 21 verbunden sind. Ferner weist das mobile Objekt 21 einen Sender/Empfänger 37, eine Benutzerschnittstelle 32, einen Objektprofil-Speicher 50, einen Informationsspeicher 40 und einen Kennungsspeicher 36 auf, welche jeweils nur mit der Verarbeitungseinrichtung 47 verbunden sind. Die Benutzerschnittstelle umfasst vorzugsweise eine Anzeige, die besonders bevorzugt als berührungsempfindlicher Touch-Screen ausgebildet ist und damit auch als Eingabemittel für den Benutzer dienen kann. Ein mobile Objekt kann damit die äußere Erscheinung eines bekannten persönlichen digitalen Assistenten (PDA) haben. Im Unterschied zu diesem bestimmt sich die Funktionsweise eines mobilen Objektes 21 jedoch im Zusammenspiel mit den Basisstationen 22 und dem Informationsserver 23. Die auf dem mobilen Objekt dargestellten Inhalte und die vorzugsweise grafisch angebotenen Dienste werden durch das Zusammenwirken von mobilem Objekt 21, Basisstation 22 und Informationsserver 23 in Abhängigkeit vom jeweiligen Ort des Befindens des mobilen Objektes 21 bestimmt.

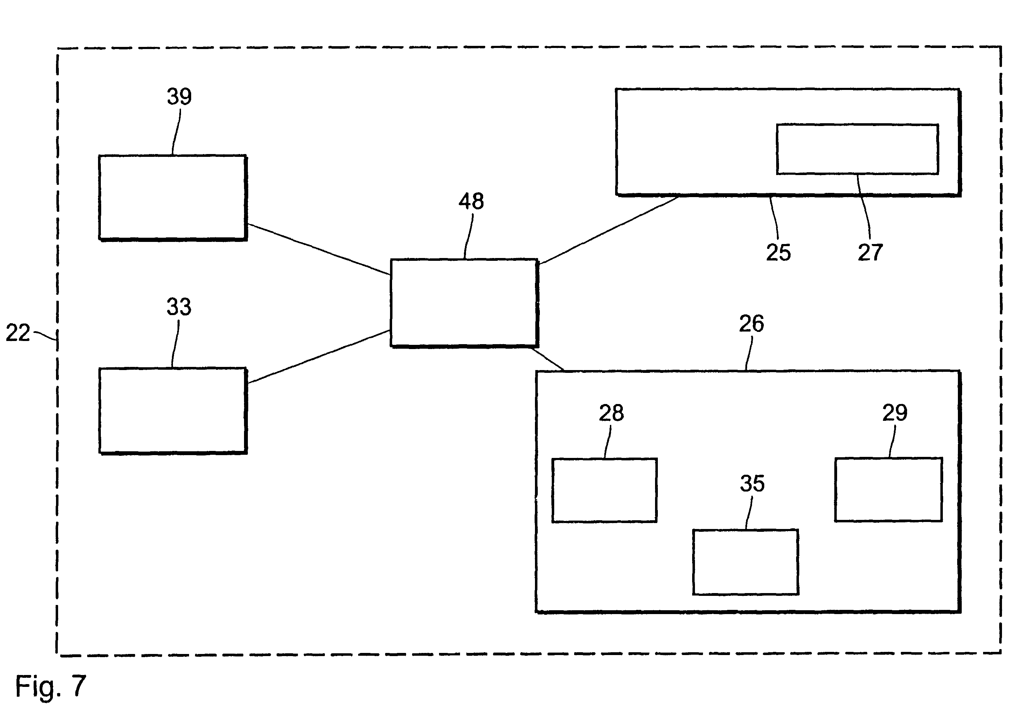

Die Basisstation 22 weist gemäß Fig. 7 ebenfalls eine zentrale Verarbeitungseinrichtung 48 auf, mit der ein Sender/Empfänger 39, ein Zwischenspeicher 33, eine Abtasteinrichtung 25 und eine Auswahleinrichtung 26 verbunden sind. Die Abtasteinrichtung 25 umfaßt ferner einen Objektspeicher 27 und die Auswahleinrichtung 26 umfaßt einen Ereignisprozessor 28, einen Objektprofil-Speicher und einen Kennungsspeicher 35.

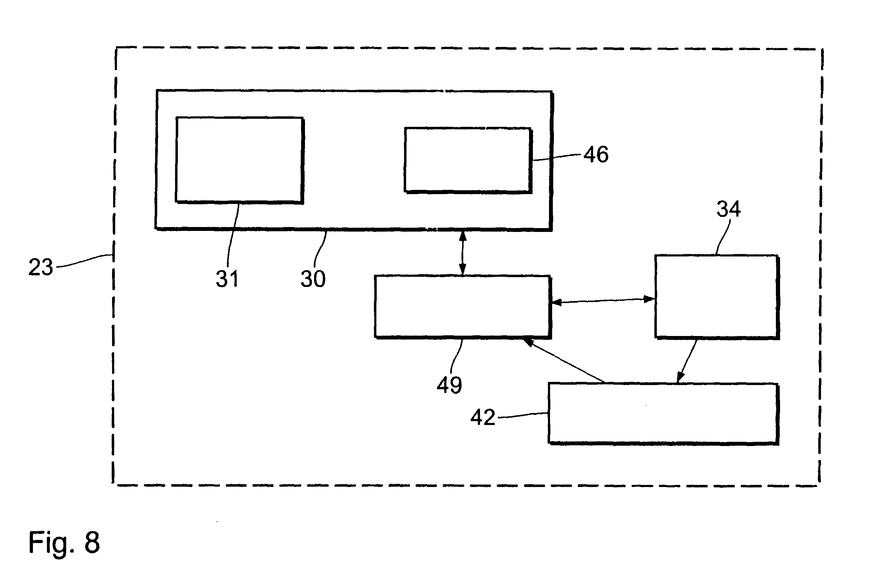

Der Informationsserver 23 weist gemäß Fig. 8 eine Verarbeitungseinrichtung 49 auf, mit der eine Datenbank 30, ein zentraler Kennungsspeicher 34 und eine Kennungserzeugungseinrichtung 42 verbunden ist. Die Datenbank 30 umfaßt dabei einen zentralen Objektprofil-Speicher 31 und einen Objektlistenspeicher 46.

Die als Clients 21 fungierenden mobilen Objekte können sich frei in einem bestimmten Bereich bewegen, während Basisstationen 22 und Informationsserver 23 ortsfest angeordnet sind. Jede Basisstation 22 hat eine begrenzte Reichweite 24. Die Basisstationen 22 können sowohl mit den mobilen Objekten 21 beispielsweise drahtlos als auch mit den Informationsservern 23 über ein LAN kommunizieren. Die Informationsserver 23 sind jeweils mit einer Datenbank 30 zum Speichern von ortsrelevanten Ereignissen und Informationen vorgesehen. Ortsrelevante Ereignisse können beispielsweise das Eintreten eines mobilen Objektes 21 in den Empfangsbereich 24 einer Basisstation 22 darstellen. Die Basisstationen 22 weisen jeweils eine Abtasteinrichtung 25 auf, die den Empfangsbereich abtastet und alle in dem Empfangsbereich 24 der Basisstation 22 befindlichen mobilen Objekte 21 anhand ihrer Kennung erfaßt und die erfaßten Daten bzw. Kennungen in einem Objektspeicher 27 in der Abtasteinrichtung 25 der Basisstation 22 speichert. Die Abtasteinrichtung 25 erfaßt das Eintreten des mobilen Objektes in und das Entfernen aus dem Empfangsbereich 24 der Basisstation 22. Außerdem wird die Verweildauer in dem Empfangsbereich der jeweiligen Basisstation erfaßt und in einem Zeitspeicher 45 in der Abtasteinrichtung 25 gespeichert.

Bevor diese Daten in der Basisstation 22 verarbeitet werden, wird eine Vorauswahl der zu verarbeitenden Daten der erfassten mobilen Objekte 21 durchgeführt. Dazu müssen vorab Objektprofile jedes mobilen Objektes 21 mittels einer Benutzerschnittstelle 32 des mobilen Objekts 21 eingegeben und über die Basisstationen 22 an den Informationsserver 23 erfolgen. Alternativ dazu kann die Übermittlung der Objektprofile mittels eines Anschlusses direkt zum Informationsserver 23 oder über das Internet von einem beliebigen Punkt aus direkt an den Informationsserver 23 übermittelt werden. Alle derart eingegebenen Objektprofile werden in einem zentralen Objektprofil-Speicher 31 in der Datenbank 30 des Informationsservers 23 gespeichert.

Wenn die Objektprofile des mobilen Objektes eingegeben werden, wird das mobile Objekt in der Datenbank 30 des Informationsservers 23 registriert. Falls das mobile Objekt bereits eine permanente Kennung aufweist, wird diese ebenfalls an den Informationsserver 23 übertragen, in einem zentralen Kennungsspeicher 34 gespeichert und registriert. Wenn das mobile Objekt jedoch keine permanente Kennung aufweist, wird dem Objekt eine temporäre Kennung durch eine Kennungserzeugungseinrichtung 42 in dem Informationsserver 23 zugewiesen. Sowohl die temporäre als auch die permanente Kennung des mobilen Objektes wird in einem Kennungsspeicher 36 in dem mobilen Objekt gespeichert. Diese Kennung wird von dem mobilen Objekt kontinuierlich oder in vorgegebenen Abständen gesendet. Wenn sich ein mobiles Objekt in dem Empfangsbereich 24 einer Basisstation 22 befindet, wird die Kennung des mobilen Objektes von der Abtasteinrichtung 25 erfaßt und entsprechende Verarbeitungen werden eingeleitet. Alternativ dazu kann die Basisstation 23 ein Aktivierungssignal oder eine Basisstation-Kennung kontinuierlich oder in vorgegebenen Abständen mittels des Senders 39 senden, welches von dem mobilen Objekt empfangen wird und bedarfsweise eine Aussendung der Kennung des mobilen Objektes initiiert.

Anschließend werden die eingegebenen Objektprofile von dem Informationsserver 23 dahingehend analysiert, ob die Objektprofile mit den Informationsangeboten der jeweiligen Basisstationen 22 übereinstimmen. Bei einer Übereinstimmung wird das Objektprofil des entsprechenden mobilen Objektes einer basisstations-spezifischen Objektliste bzw. einem Ereignisvektor hinzugefügt und in einem Objektlistenspeicher 46 in dem Informationsserver 23 gespeichert, wogegen die Kennung des mobilen Objektes in einem zentralen Kennungsspeicher 34 in dem Informationsserver 23 gespeichert wird. In dem Objektlistenspeicher 46 werden somit eine Vielzahl von auf eine spezifische Basisstation bezogene Objektlisten gespeichert und zudem wird eine übergeordnete zentrale Liste aller Objektprofile erstellt. Ferner wird eine Tabelle aller Kennungen sowie den dazugehörigen Objektprofile in dem zentralen Objektprofil-Speicher 31 erstellt. Mit anderen Worten durch die Benutzerschnittstelle 32 des mobilen Objektes 21 können von dem Anwender seine Interessen sowie sein Informationsbedarf eingegeben werden. Diese Interessen werden dann zentral erfasst und ausgewertet. Wenn diese Interessen sich mit den Informationsangeboten einer Basisstation 22 decken, werden die Daten des mobilen Objektes 21 in die Objektliste bzw. in den Ereignisvektor aufgenommen.

Aus der zentralen Objektliste werden für eine Basisstation 22 diejenigen Objekte ausgewählt, die Interesse an dem Informationsangebot der Basisstation 22 haben. Die aus diesen Objekten gebildete basisstations-spezifische Objektliste wird zum einen zentral in einem Objektlistenspeicher 46 und zum anderen in einem Objektprofil-Speicher 29 in der Auswahleinrichtung 26 gespeichert.

In der Auswahleinrichtung 26 der Basisstation 22 befindet sich ferner ein Ereignisprozessor bzw. ein Ereignisvektorprozessor 28. Dieser Ereignisprozessor 28 vergleicht die in dem Objektspeicher 27 gespeicherten Kennungen mit den in dem Objektprofil-Speicher 29 gespeicherten Kennungen. Dabei erfolgt ein Vergleich der Kennungen der mobilen Objekte 21, die sich in der Reichweite 24 der Basisstation 22 (Fig. 5, 5a bis 5c) befinden, mit den Kennungen der in dem Objektprofil-Speicher 29 gespeicherten basisspezifischen Objektliste der mobilen Objekten 21, d.h. diejenigen, die ein Interesse an dem Informationsangebot der Basisstation haben. Als Ergebnis wird eine Schnittmenge derjenigen mobilen Objekte erhalten, die sich in dem Empfangsbereich 24 der Basisstation 22 befinden und tatsächlich Interesse an dem Informationsangebot der Basisstation haben (Fig. 5, 5a und 5b).

Für die Basisstation 22 sind lediglich diejenigen mobilen Objekte 21 von Interesse, die sich in ihrer Reichweite befinden und in der basisspezifischen Objektliste eingetragen sind, die also Interesse an dem Informationsangebot der Basisstation haben. So können sich, wie in Figur 5 gezeigt, beispielsweise fünf Clients 21 a bis 21 e in dem gesamten Bereich befinden, drei Clients 21 a bis 21 c in der Reichweite der Basisstation 22A und zwei Clients 21 d und 21 e sich in der Reichweite 24 der Basisstation 22B. Die Abtasteinrichtung 25 der Basisstation 22A erfasst, daß die drei Clients 21a bis 21c sich in der Reichweite 24 der Basisstation 22A befinden und speichert ihre Kennungen in dem Objektspeicher 27.

Durch den Ereignisprozessor 28 werden die Kennungen der drei sich in der Reichweite der Basisstation A befindlichen Clients 21 a bis 21 c mit den Kennungen der in dem Objektprofil-Speicher 29 der Auswahleinrichtung 26 gespeicherten basisspezifischen Objektliste, d.h. der sich für das Informationsangebot der Basisstation A interessierenden Clients 21a, 21b und 21 e, verglichen. Daraus ergibt sich, daß der Client 21c kein Interesse an dem Informationsangebot der Basisstation hat, somit müssen die Daten bzw. die Kennung dieses Clients nicht bei der Verarbeitung in der Basisstation berücksichtigt werden, d.h. die Ereignisrate bzw. die Eventrate in dem Informationsserver wird wesentlich reduziert und es kommt zu einer Entlastung des Informationsservers. Demzufolge werden die Daten dieses Clients 21 c sofort wieder aus dem Objektspeicher 27 gelöscht. Durch diese Vorauswahl wird eine unnötige Belegung der Systemressourcen verhindert. Die Daten des sich außerhalb der Reichweite der Basisstation A befindlichen Clients 21 e werden ebenfalls nicht bei der Verarbeitung berücksichtigt, da er sich außerhalb der Reichweite der Basisstation befindet und somit die Informationen der Basisstation A nicht empfangen kann.

Die Basisstation 22B erfasst ebenfalls, welche der Clients 21 in ihren Sendebereich 24 hineintritt, ihn wieder verlässt oder sich für eine längere Zeit in ihm aufhält. Die Daten bzw. die Kennungen in dem Objektspeicher 27 der Abtasteinrichtung 25 (d.h. alle sich in der Reichweite der Basisstation befindlichen mobilen Objekte), die Daten bzw. die Kennungen in dem zentralen Objektprofil-Speicher 31 der Informationsserver 23 (die Objektprofile sämtlicher mobilen Objekte) und die Daten bzw. die Kennungen in dem Objektprofil-Speicher 29 der Auswahleinrichtung 26 der Basisstation 22 (die Objektprofile aller sich für das Informationsangebot der Basisstation interessierenden mobilen Objekte) werden in vorgegebenen zeitlichen Abständen aktualisiert.

Wenn durch den Ereignisprozessor 28 bestimmt wird, dass die Kennung eines in dem Empfangsbereich der Basisstation befindlichen mobilen Objektes mit einer in dem Kennungsspeicher 35 gespeicherten Kennung aus der basisspezifischen Objektliste übereinstimmt, wird eine Übertragung der von dem mobilen Objekt angeforderten Informationen oder Daten initiiert. Dabei dient die Benutzerschnittstelle 32 zum eine beispielsweise der Eingabe des Objektprofils und zum anderen der Ausgabe der empfangenen Informationen, mit anderen Worten sie dient als Eingabe/Ausgabeeinheit.

Dabei können die zu übertragenen Informationen sich auf dem Informationsserver 23, auf der Basisstation oder an einer Stelle im Internet befinden. Wenn sich die zu übertragenden Informationen auf dem Informationsserver 23 oder im Internet befinden, können diese Informationen zunächst an die jeweilige Basisstation übermittelt und in einem Zwischenspeicher 33 gespeichert werden, bevor sie an das mobile Objekt beispielsweise drahtlos übertragen werden oder alternativ dazu können die Informationen direkt zum mobilen Objekt weitergeleitet werden. Wenn viele mobile Objekte oder Basisstationen auf den Informationsserver 23 zugreifen, kann es dazu kommen, dass die Bandbreite der Datenleitungen nicht ausreicht und die Übertragungen zu langsam vonstatten gehen. Die Anfragehäufigkeit der zu übermittelten Informationen wird bestimmt und wenn auf bestimmte Informationen von mobilen Informationsvorrichtungen häufiger zugegriffen wird, können diese Informationen in einem geeigneten Zwischenspeicher (Cache) 33 in der Basisstation zwischengespeichert werden.

Wenn der Informationsserver 23 nach Analyse aller Objektprofile feststellt, dass ein großes Interesse nach bestimmten Informationsinhalten besteht, können diese Informationsinhalte vorab an den Zwischenspeicher 33 der Basisstation übertragen werden. Dies führt zu einer Verringerung der zu übertragenden Datenmenge, da die Informationen nun nicht mehr erst von dem Informationsserver 23 angefordert werden müssen sondern direkt und einmalig von der Basisstation an das mobile Objekt übertragen und dort in einem Informationsspeicher 40 gespeichert werden kann. Um die Datennetze weiter zu entlasten, kann die Übertragung der zwischenzuspeichernden Informationen von dem Informationsserver an die Basisstation während der Nacht übertragen werden also dann wenn kaum oder nur wenig Verkehr in den Datenleitungen herrscht.

Die in der Datenbank 30 des Informatiosservers 23 enthaltenen Informationen können u. a. in einem HTML-, einem XML- oder einem WML-Format gespeichert sein. Der Informationsserver 23 kann ferner mit anderen Netzwerken wie beispielsweise mit dem Internet verbunden sein und Informationen mit diesen Netzwerken austauschen.

## Patentansprüche

1. Datenübertragungsverfahren zum Übertragen ortsrelevanter Daten von einem Informationsserver (23) an eine mobile Kommunikationseinrichtung (1) über mindestens eine, die Übertragung vermittelnde Basisstation (22), wobei der Informationsserver (23) Profile von mobilen Kommunikationseinheiten (1) enthält, das die Schritte umfasst:
Bestimmen der in der Reichweite der Basisstation (22) befindlichen mobilen Kommunikationseinrichtungen (1),
Speichern mindestens eines Profils für die in der Reichweite der Basisstation (22) befindlichen Kommunikationseinheiten (1) in einem Objektprofilspeicher (29) der Basisstation (22),
Auswählen und Abrufen der ortsrelevanten Daten für die in der Reichweite der Basisstation (22) befindlichen mobilen Kommunikationseinheiten (1) gemäß dem Profil, und
Übertragen der gemäß dem Profil abgerufenen ortsrelevanten Informationen an die dem Profil entsprechende mobile Kommunikationseinheit (1).

2. Verfahren nach Anspruch 1, **dadurch gekennzeichnet, dass** das Bestimmen der in Reichweite der Basisstation (22) befindlichen mobilen Einheiten durch die Basisstation (22) vorgenommen wird.

3. Verfahren nach Anspruch 1 oder 2, **dadurch gekennzeichnet, dass** das Bestimmen der in Reichweite der Basisstation (22) befindlichen mobilen Einheiten (1) in Abständen wiederholt wird und dass für jede neu in Reichweite der Basisstation (22) befindliche mobile Einheit das Abrufen eines Profils erfolgt.

4. Verfahren nach Anspruch 3, **dadurch gekennzeichnet, dass** in der Basistation befindliche und nicht mehr benötigte Profile gelöscht werden.

5. Verfahren nach einem der vorangehenden Ansprüche, **dadurch gekennzeichnet, dass** die Profile vorab an den Informationsserver (23) übertragen werden.

6. Verfahren nach Anspruch 5, **dadurch gekennzeichnet, dass** das Übertragen der Profile von der mobilen Kommunikationseinheit (1) ausgelöst wird.

7. Verfahren nach Anspruch 5 oder 6, **dadurch gekennzeichnet, dass** das Übertragen der Profile über die Basisstation (22) erfolgt.

8. Verfahren nach einem der vorhergehenden Ansprüche, **dadurch gekennzeichnet, dass** häufig an die mobilen Einheiten zu übertragende Daten in der Basisstation (22) zwischengespeichert werden.

9. Basisstation zum Abrufen ortsrelevanter Daten von einem Informationsserver (23) und Übertragen der abgerufenen Daten an eine mobile Kommunikationseinheit (1) mit einem Sender/Empfänger (39) zum Kommunizieren mit der mobilen Kommunikationseinheit (1), einer Abrufeinheit zum Abrufen von auf dem Informationsserver (4) gespeicherten Informationen, einer Abtasteinrichtung (25) zum Erfassen der in Reichweite befindlichen mobilen Kommunikationseinheiten (1) und einer mit dem Sender/Empfänger (39) und der Abtasteinrichtung (25) verbundenen Verarbeitungseinrichtung (48)zum Verarbeiten der Daten, **dadurch gekennzeichnet, dass** die Verarbeitungseinrichtung dazu ausgestaltet ist, Profile der von der Abtasteinrichtung (25) erfassten mobilen Kommunikationseinheiten (1) vom Informationsserver abzurufen und zu speichern, und dass eine mit der Verarbeitungseinrichtung (48) verbundene Auswahleinrichtung (26) vorhanden ist, die dazu ausgestaltet ist, anhand der Profile die an die mobilen Einheiten zu übertragenden Daten auszuwählen.

10. Basisstation nach Anspruch 9, **dadurch gekennzeichnet, dass** die Abtasteinrichtung dazu ausgestaltet ist, die in Reichweite befindlichen mobilen Kommunikationseinheiten (1) in bestimmten Zeitabständen zu erfassen und die Verarbeitungseinrichtung dazu ausgestaltet ist, die Profile der von der Abtasteinrichtung (25) erfassten mobilen Kommunikationseinheiten (1) in bestimmten Zeitabständen vom Informationsserver abzurufen.

11. Basisstation nach Anspruch 9 oder 10, **dadurch gekennzeichnet, dass** sie einen Zwischenspeicher zum Speichern häufig an mobile Kommunikationseinheiten (1) zu übertragender Daten umfasst.

## Claims

1. Data transmission method for transmitting location-relevant data from an information server (23) to a mobile communications device (1) via at least one base station (22) that switches the transmission, wherein the information server (23) contains profiles of mobile communications units (1), comprising the steps of:
determining the mobile communications devices (1) situated within the range of the base station (22),
storing at least one profile for the communications units (1) situated within the range of the base station (22), in an object profile memory (29) of the base station (22),
selecting and retrieving the location-relevant data for the mobile communications units (1) situated within the range of the base station (22) according to the profile, and transmitting the location-relevant information retrieved according to the profile to the mobile communications unit (1) corresponding to the profile.

2. Method according to claim 1, **characterised in that** determination of the mobile unit located within the range of the base station (22) is carried out by the base station (22).

3. Method according to claim 1 or 2, **characterised in that** determination of the mobile units (1) situated within the range of the base station (22) is repeated at intervals and **in that** a profile is retrieved for each new mobile unit situated within the range of the base station (22).

4. Method according to claim 3, **characterised in that** profiles situated in the base station and no longer required are deleted.

5. Method according to any of the preceding claims, **characterised in that** the profiles are transmitted in advance to the information server (23).

6. Method according to claim 5, **characterised in that** transmission of the profiles is triggered by the mobile communications unit (1).

7. Method according to claim 5 or 6, **characterised in that** the profiles are transmitted via the base station (22).

8. Method according to any of the preceding claims, **characterised in that** data to be transmitted frequently to the mobile units is buffered in the base station (22).

9. Base station for retrieving location-relevant data from an information server (23) and transmitting the retrieved data to a mobile communications unit (1) comprising a transceiver (39) for communicating with the mobile communications unit (1), a retrieval unit for retrieving information stored on the information server (4), a scanning device (25) for detecting the mobile communications units (1) situated within the range and a processing device (48) connected to the transceiver (39) and the scanning device (25) for processing the data, **characterised in that** the processing device is configured to retrieve profiles of the mobile communications units (1) detected by the scanning device (25) from the information server and to store them, and **in that** there is a selector (26) connected to the processing device (48) and configured to select the data to be transmitted to the mobile units with the aid of the profiles.

10. Base station according to claim 9, **characterised in that** the scanning device is configured to detect the mobile communications units (1) situated within the range at certain intervals, and the processing device is configured to retrieve the profiles of the mobile communications units (1) detected by the scanning device (25) from the information server at certain time intervals.

11. Base station according to claim 9 or 10, **characterised in that** it comprises a buffer for storing data to be transmitted frequently to mobile communications units (1).

## Revendications

1. Procédé de transmission de données pour la transmission de données importantes du point de vue du lieu, pour un serveur d'informations (23) à un dispositif de communication mobile (1) par l'intermédiaire d'au moins une station de base (22) exécutant la transmission, le serveur d'informations (23) contenant des profils d'unités de communication mobiles (1), le procédé comprenant les étapes consistant à:
déterminer les dispositifs de communication mobiles (1) situés dans la portée de la station de base (22),
mémoriser au moins un profil pour les unités de communication (1) situées dans la portée de la station de base (22), dans une mémoire (29) de profils d'objets de la station de base (22),
sélectionner et appeler les données, importantes du point de vue du lieu, pour les unités de communication mobiles (1), situées dans la portée de la station de base (22), en fonction du profil, et
transmettre des informations, importantes du point de vue du lieu, appelées en fonction du profil, à l'unité de communication mobile (1) correspondant au profil.

2. Procédé selon la revendication 1, **caractérisé en ce que** la détermination des unités mobiles situées dans la portée de la station de base (22) est réalisée par la station de base (22).

3. Procédé selon la revendication 1 ou 2, **caractérisé en ce que** la détermination des unités mobiles (1) situées dans la portée de la station de base (22) est répétée par intervalles et que l'appel d'un profil est exécuté pour chaque unité mobile nouvellement présente dans la portée de la station de base (22).

4. Procédé selon la revendication 3, **caractérisé en ce que** des profils situés dans la station de base et qui ne sont plus nécessaires, sont effacés.

5. Procédé selon l'une des revendications précédentes, **caractérisé en ce que** les profils sont transmis préalablement au serveur d'informations (23).

6. Procédé selon la revendication 5, **caractérisé en ce que** la transmission des profils est déclenchée par l'unité de communication mobile (1).

7. Procédé selon la revendication 5 ou 6, **caractérisé en ce que** la transmission des profils s'effectue au moyen de la station de base (22).

8. Procédé selon l'une des revendications précédentes, **caractérisé en ce que** des données devant être transmises fréquemment aux unités mobiles sont mémorisées temporairement dans la station de base (22).

9. Station de base pour l'appel de données, importantes du point de vue du lieu, par un serveur d'informations (23) et la transmission des données appelées à une unité de communication mobile (1) comportant un émetteur/récepteur (39) pour communiquer avec l'unité de communication mobile (1), une unité d'appel pour appeler des informations mémorisées dans le serveur d'informations (4), un dispositif de détection (25) pour détecter les unités de communication mobiles (1) situées dans la portée, et un dispositif de traitement (48) relié à l'émetteur/au récepteur (39) et au dispositif de détection (25) pour traiter les données, **caractérisée en ce que** le dispositif de traitement est agencé de manière à appeler et mémoriser des profils des unités de communication mobiles (1) détectées par le dispositif de détection (25), par le serveur d'informations, et qu'il est prévu un dispositif de sélection (26), qui est relié au dispositif de traitement (48) et est agencé de manière à sélectionner, sur la base des profils, les données devant être transmises aux unités mobiles.

10. Station de base selon la revendication 9, **caractérisée en ce que** le dispositif de détection est agencé pour détecter les unités de communication mobile (1) situées dans l'étendue de la portée, à des intervalles de temps déterminés et que le dispositif de traitement est agencé pour l'appel des profils des unités de communication mobiles (1) détectés par le dispositif de détection (25), à des intervalles de temps déterminés, par le serveur d'informations.

11. Station de base selon la revendication 9 ou 10, **caractérisée en ce qu'**il comprend une mémoire intermédiaire servant à mémoriser des données à transmettre fréquemment à des unités de communication mobiles (1).
